# EUROPÄISCHE PATENTSCHRIFT

(11) **EP 3 237 843 B1**
(45) Veröffentlichungstag und Bekanntmachung des Hinweises auf die Patenterteilung: **06.02.2019**
(21) Anmeldenummer: 15822940.1
(22) Anmeldetag: 23.12.2015
(51) Int. Cl.: G01C 15/00

(54) **VERFAHREN ZUM ÜBERTRAGEN EINES OBJEKTES AUF EINE GRENZFLÄCHE**
METHOD FOR TRANSFERRING AN OBJECT TO A BOUNDARY AREA
PROCÉDÉ DE TRANSFERT D'UN OBJET SUR UNE SURFACE LIMITE

(30) Priorität: 23.12.2014 EP 14200144
(43) Veröffentlichungstag der Anmeldung: 01.11.2017
(73) Patentinhaber: Hilti Aktiengesellschaft, 9494 Schaan (LI)
(72) Erfinder: GOGOLLA, Torsten, 9494 Schaan (LI); WINTER, Andreas, 6800 Feldkirch (AT); NUESCH, Hanspeter, 9492 Eschen (CH)
(74) Vertreter: Hilti Aktiengesellschaft Corporate Intellectual Property
(86) Internationale Anmeldenummer: PCT/EP2015/081102
(87) Internationale Veröffentlichungsnummer: WO 2016/102637

(56) Entgegenhaltungen:
- EP-A1- 1 022 542
- DE-A1- 10 034 035
- US-A- 6 064 940

## Beschreibung

### Technisches Gebiet

Die vorliegende Erfindung betrifft ein Verfahren zum Übertragen eines Objektes auf eine Grenzfläche mittels einer Markiereinrichtung gemäß dem Oberbegriff des Anspruchs 1.

### Stand der Technik

Aus DE 20 2009 017 424 U1 ist eine Vorrichtung zum Übertragen eines Objektes auf eine Grenzfläche mittels einer Markiereinrichtung bekannt. Die Vorrichtung umfasst eine Markiereinrichtung, eine Lokalisierungseinrichtung und eine Kontrolleinrichtung. Der Bediener bewegt die Markiereinrichtung über die Grenzfläche. Die Lokalisierungseinrichtung ermittelt während der Bewegung mit der Markiereinrichtung regelmäßig die aktuelle Position der Markiereinrichtung. Der Bediener kann eine Liste von Zielpunkten programmieren. Die Markiereinrichtung kann durch optische, akustische oder haptische Rückmeldung die Nähe der Markiereinrichtung signalisieren. Die bekannte Vorrichtung ist nicht geeignet, Objekte auf eine Grenzfläche zu übertragen, deren Abmessungen grösser sind als die Abmessungen des Druckfeldes der Markiereinrichtung.

Andere Ausführungen sind aus DE 100 34 035 A1, EP 1 022 542 A1 und US 6,064,940 bekannt.

### Darstellung der Erfindung

Die Aufgabe der vorliegenden Erfindung besteht in der Entwicklung eines Verfahrens zum Übertragen eines Objektes auf eine Grenzfläche mittels einer Markiereinrichtung, das für Objekte geeignet ist, deren Abmessungen grösser sind als die Abmessungen des Druckfeldes der Markiereinrichtung.

Diese Aufgabe wird bei dem eingangs genannten Verfahren zum Übertragen eines Objektes auf eine Grenzfläche erfindungsgemäß durch die Merkmale des unabhängigen Anspruchs 1 gelöst. Vorteilhafte Weiterbildungen sind in den abhängigen Ansprüchen angegeben. Erfindungsgemäß ist das Verfahren zum Übertragen eines Objektes auf eine Grenzfläche, die als Begrenzung eines Raumes ausgebildet ist, mittels einer Vorrichtung, die eine Markiereinrichtung mit einer Druckereinrichtung, eine Lokalisierungseinrichtung und eine Kontrolleinrichtung aufweist, dadurch gekennzeichnet, dass:
▪ in einem ersten Schritt ein zu markierendes erstes Objekt mit einer ersten Startposition und ersten Soll-Koordinaten ausgewählt wird, wobei die Abmessungen des ersten Objektes grösser sind als die Abmessungen eines Druckfeldes der Druckereinrichtung,
▪ in einem zweiten Schritt mittels der Lokalisierungseinrichtung eine aktuelle Position und eine aktuelle Orientierung der Markiereinrichtung bestimmt und an die Kontrolleinrichtung übermittelt wird,
▪ in einem dritten Schritt von der Kontrolleinrichtung aus der aktuellen Position und der aktuellen Orientierung der Markiereinrichtung ein aktuelles Druckfeld der Markiereinrichtung auf der Grenzfläche bestimmt wird,
▪ in einem vierten Schritt die erste Startposition des ersten Objektes von der Kontrolleinrichtung mit dem aktuellen Druckfeld der Markiereinrichtung auf der Grenzfläche verglichen werden und
▪ von der Kontrolleinrichtung ein Steuerbefehl zum Markieren des ersten Objektes an die Markiereinrichtung erteilt wird, wenn die erste Startposition des ersten Objektes innerhalb des aktuellen Druckfeldes der Markiereinrichtung auf der Grenzfläche angeordnet ist.

Das erfindungsgemäße Verfahren befasst sich damit, bekannte Objekte mittels der Markiereinrichtung auf die Grenzfläche zu übertragen. Unter dem Begriff "Objekt" werden sämtliche Elemente, die in einem Untergrund angeordnet sein können, oder Elemente, die auf einer Grenzfläche angebracht werden können, zusammengefasst. Beispiele für Objekte sind Türdurchbrüche, der Verlauf von Stromleitungen und die Anordnung von Armierungseisen in einem Eisengitter.

Notwendige Voraussetzung für das erfindungsgemäße Verfahren ist, dass die Soll-Koordinaten des zu markierenden Objektes bekannt sind; außerdem sollte eine Startposition festgelegt sein. Die Soll-Koordinaten können als absolute Koordinaten oder als relative Koordinaten bezogen auf ein Referenzobjekt vorliegen. Für die Anwendung besonders relevant ist die Möglichkeit, mit Hilfe des erfindungsgemäßen Verfahrens die Angaben eines Konstruktionsplans zu übertragen. In einem Konstruktionsplan ist eine Vielzahl an Objekten mit ihren Objekteigenschaften und Soll-Koordinaten enthalten. Der Konstruktionsplan sollte für die Kontrolleinrichtung in lesbarer Form ausgebildet sein, um die Daten des Objektes direkt aus dem Konstruktionsplan laden zu können; anderenfalls müssen die Daten des Objektes vom Bediener manuell in die Kontrolleinrichtung eingegeben werden.

Im ersten Schritt wird ein zu markierendes erstes Objekt mit einer ersten Startposition und ersten Soll-Koordinaten ausgewählt; die Abmessungen des ersten Objektes sind grösser als die Abmessungen des Druckfeldes. Bevor eine Markierung erfolgen kann, muss die Markiereinrichtung über dem ersten Objekt positioniert werden. Dazu wird im zweiten Schritt mittels der Lokalisierungseinrichtung die aktuelle Position und aktuelle Orientierung der Markiereinrichtung im Raum bestimmt. Aus der aktuellen Position und der aktuellen Orientierung der Kontrolleinrichtung bestimmt die Kontrolleinrichtung im dritten Schritt das aktuelle Druckfeld der Kontrolleinrichtung auf der Grenzfläche; der Zusammenhang zwischen der aktuellen Position und aktuellen Orientierung und dem aktuellen Druckfeld der Markiereinrichtung auf der Grenzfläche ist bekannt. Anschließend wird im vierten Schritt die erste Startposition des ersten Objektes von der Kontrolleinrichtung mit dem aktuellen Druckfeld der Markiereinrichtung auf der Grenzfläche verglichen. Wenn die erste Startposition des ersten Objektes innerhalb des aktuellen Druckfeldes der Markiereinrichtung auf der Grenzfläche angeordnet ist, erstellt die Kontrolleinrichtung einen Steuerbefehl an die Markiereinrichtung zum Markieren des ersten Objektes.

Die weiteren Verfahrensschritte des erfindungsgemäßen Verfahrens hängen vom Vergleich der ersten Startposition mit dem aktuellen Druckfeld der Markiereinrichtung auf der Grenzfläche ab. Dabei werden zwei Varianten unterschieden: In einer ersten Variante ist die erste Startposition außerhalb des aktuellen Druckfeldes der Markiereinrichtung auf der Grenzfläche angeordnet und in einer zweiten Variante ist die erste Startposition innerhalb des aktuellen Druckfeldes der Markiereinrichtung auf der Grenzfläche angeordnet.

In der ersten Variante wird aus der aktuellen Position und aktuellen Orientierung der Markiereinrichtung und der ersten Startposition des ersten Objektes von der Kontrolleinrichtung eine Verstellanweisung für die Markiereinrichtung berechnet und auf einer Anzeigeeinrichtung dargestellt, wenn die erste Startposition außerhalb des aktuellen Druckfeldes der Markiereinrichtung auf der Grenzfläche angeordnet ist.

In der zweiten bevorzugten Variante wird von der Kontrolleinrichtung eine Bedienungsanweisung, die Markiereinrichtung anzuhalten, erstellt und auf einer Anzeigeeinrichtung dargestellt, wenn die erste Startposition innerhalb des aktuellen Druckfeldes der Markiereinrichtung auf der Grenzfläche angeordnet ist. Dabei wird von der Kontrolleinrichtung ein Steuerbefehl zum Markieren des ersten Objektes an die Markiereinrichtung erteilt, wenn die erste Startposition innerhalb des aktuellen Druckfeldes der Markiereinrichtung auf der Grenzfläche angeordnet ist und die Markiereinrichtung nicht bewegt wird. Das Verfahren hat den Vorteil, dass das Auslösen der Markierung von der Kontrolleinrichtung gesteuert wird.

Besonders bevorzugt wird während des Markierens mit der Markiereinrichtung aus den ersten Soll-Koordinaten des ersten Objektes und der aktuellen Position und aktuellen Orientierung der Markiereinrichtung von der Kontrolleinrichtung eine Verstellanweisung für die Markiereinrichtung erstellt und auf der Anzeigeeinrichtung dargestellt. Durch die Verstellanweisung wird der Bediener angeleitet, wie die Markiereinrichtung über die Grenzfläche zu bewegen ist.

Die aktuelle Position und aktuelle Orientierung der Markiereinrichtung wird mit einer Lokalisierungsfrequenz von der Lokalisierungseinrichtung bestimmt und die Positionsdaten werden mit einer Übertragungsfrequenz von der Lokalisierungseinrichtung an die Kontrolleinrichtung übermittelt.

Wenn die ersten Soll-Koordinaten des ersten Objektes außerhalb des aktuellen Druckfeldes der Markiereinrichtung auf der Grenzfläche angeordnet sind, wird von der Kontrolleinrichtung ein Steuerbefehl, das Markieren des ersten Objektes zu unterbrechen, an die Markiereinrichtung erteilt. Die Markierung wird nur übertragen, wenn die Markiereinrichtung richtig positioniert ist und sich die Soll-Koordinaten im Druckfeld der Markiereinrichtung auf der Grenzfläche befinden.

In einer Weiterentwicklung ist das erfindungsgemäße Verfahren zusätzlich dadurch gekennzeichnet, dass im ersten Schritt neben dem ersten Objekt ein zu markierendes zweites Objekt mit einer zweiten Startposition und zweiten Soll-Koordinaten ausgewählt wird und im vierten Schritt neben der ersten Startposition des ersten Objektes die zweite Startposition des zweiten Objektes von der Kontrolleinrichtung mit dem aktuellen Druckfeld der Markiereinrichtung auf der Grenzfläche verglichen. Das weiterentwickelte Verfahren hat den Vorteil, dass mehrere Objekte mittels der Markiereinrichtung auf die Grenzfläche übertragen werden können. Der Bediener wählt in einem vorbereitenden Schritt die zu markierenden Objekte aus und überträgt die Objekte anschliessend auf die Grenzfläche.

In einer ersten Variante wird von der Kontrolleinrichtung an die Markiereinrichtung ein Steuerbefehl zum Markieren des ersten Objektes erteilt, wenn die erste Startposition innerhalb des aktuellen Druckfeldes der Markiereinrichtung auf der Grenzfläche angeordnet ist, oder ein Steuerbefehl zum Markieren des zweiten Objektes erteilt, wenn die zweite Startposition innerhalb des aktuellen Druckfeldes der Markiereinrichtung auf der Grenzfläche angeordnet ist.

Besonders bevorzugt wird nach dem Markieren eines Objektes aus der aktuellen Position und aktuellen Orientierung der Markiereinrichtung und der Startposition des anderen Objektes von der Kontrolleinrichtung eine Verstellanweisung für die Markiereinrichtung berechnet und auf einer Anzeigeeinrichtung dargestellt.

In der zweiten Variante werden aus der aktuellen Position der Markiereinrichtung sowie der ersten und zweiten Startposition des ersten und zweiten Objektes von der Kontrolleinrichtung ein erster und zweiter Abstand berechnet, wenn die erste und zweite Startposition außerhalb des aktuellen Druckfeldes der Markiereinrichtung auf der Grenzfläche angeordnet sind. Besonders bevorzugt werden der erste und zweite Abstand von der Kontrolleinrichtung miteinander verglichen und für das Objekt mit dem geringeren Abstand zur aktuellen Position der Markiereinrichtung von der Kontrolleinrichtung eine Verstellanweisung für die Markiereinrichtung berechnet und auf einer Anzeigeeinrichtung dargestellt.

Bei mehreren zu markierenden Objekten entscheidet der Abstand der Startposition des Objektes zur aktuellen Position der Markiereinrichtung über die Reihenfolge, in der die Objekte von der Markiereinrichtung auf die Grenzfläche übertragen werden.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, der Zeichnung sowie den Ansprüchen offenbarten Merkmale der Erfindung können sowohl einzeln für sich als auch in beliebiger Kombination für die Weiterbildung der Erfindung wesentlich sein. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIG. 1: die Anwendung einer Vorrichtung zum Übertragen eines Objektes auf eine als Rückwand ausgebildete Grenzfläche mit einer Markiereinrichtung, einer Lokalisierungseinrichtung und einer Kontrolleinrichtung;
- FIG. 2: die Rückwand der FIG. 1 mit einem zu markierenden ersten Objekt und einem zu markierenden zweiten Objekt;
- FIG. 3: das Zusammenwirken der Markiereinrichtung, der Lokalisierungseinrichtung und der Kontrolleinrichtung der in FIG. 1 gezeigten Vorrichtung in Form eines Blockdiagramms;
- FIG.4: eine erste Ausführungsvariante des erfindungsgemäßen Verfahrens zum Übertragen eines als Türdurchbruch ausgebildeten Objektes in Form eines Ablaufdiagramms; und
- FIG.5: eine zweite Ausführungsvariante des erfindungsgemäßen Verfahrens zum Übertragen eines als Türdurchbruch ausgebildeten ersten Objektes und eines als Mauerschlitz ausgebildeten zweiten Objektes in Form eines Ablaufdiagramms.

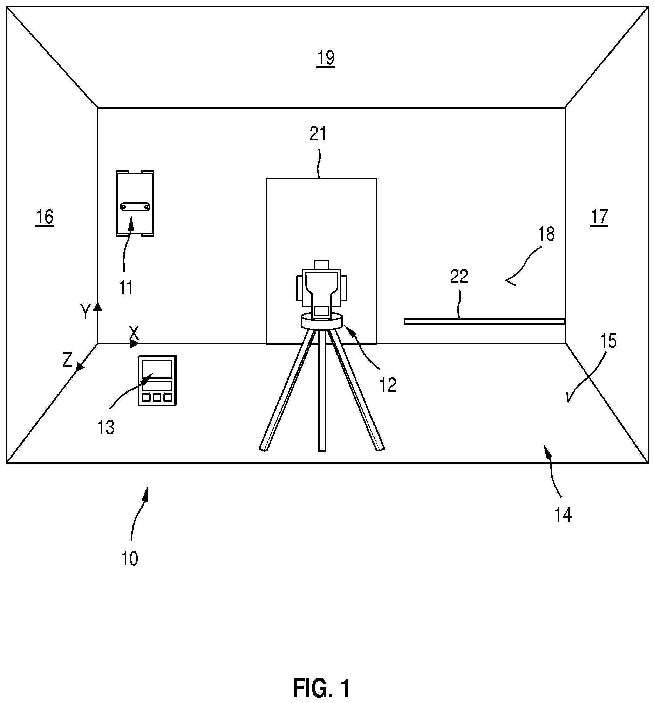

**FIG. 1** zeigt eine Vorrichtung **10** zur Durchführung des erfindungsgemäßen Verfahrens zum Übertragen eines Objektes auf eine Grenzfläche. Unter dem Begriff "Objekt" werden sämtliche Elemente, die in einem Untergrund angeordnet sein können, oder Elemente, die auf einer Grenzfläche angebracht werden können, zusammengefasst. Beispiele für Objekte sind Türdurchbrüche, der Verlauf von Stromleitungen und die Anordnung von Armierungseisen in einem Eisengitter. Die Vorrichtung 10 umfasst eine Markiereinrichtung **11**, eine Lokalisierungseinrichtung **12** und eine Kontrolleinrichtung **13**. Die Markiereinrichtung 11, Lokalisierungseinrichtung 12 und Kontrolleinrichtung 13 sind im Ausführungsbeispiel der FIG. 1 als separate Komponenten ausgebildet, die über Kommunikationsleitungen verbindbar sind und miteinander kommunizieren können. Die Markiereinrichtung 11 ist als handgeführte Markiereinrichtung ausgebildet, die während des Markierens über die Grenzfläche bewegt wird.

Das erfindungsgemäße Verfahren wird anhand einer Aufgabe in einem Innenraum **14** beschrieben. Der Innenraum 14 besteht aus einem Boden **15**, einer linken und rechten Seitenwand **16**, **17**, einer Rückwand **18** und einer Decke **19**. Die Begrenzungen 15-19 des Innenraumes 14 werden unter dem Begriff "Grenzfläche" zusammengefasst. Der Innenraum 14 wird von einem dreidimensionalen Koordinatensystem **X**, **Y**, **Z** aufgespannt, dessen Koordinatenursprung (0, 0, 0) in der linken, unteren Ecke zwischen Boden 15, linker Seitenwand 16 und Rückwand 18 angeordnet ist. An der Rückwand 18 sollen ein Türe und eine horizontale Stromleitung eingebaut werden. Für die Aufgabe werden ein Türdurchbruch als erstes Objekt **21** und ein horizontaler Mauerschlitz als zweites Objekt **22** definiert.

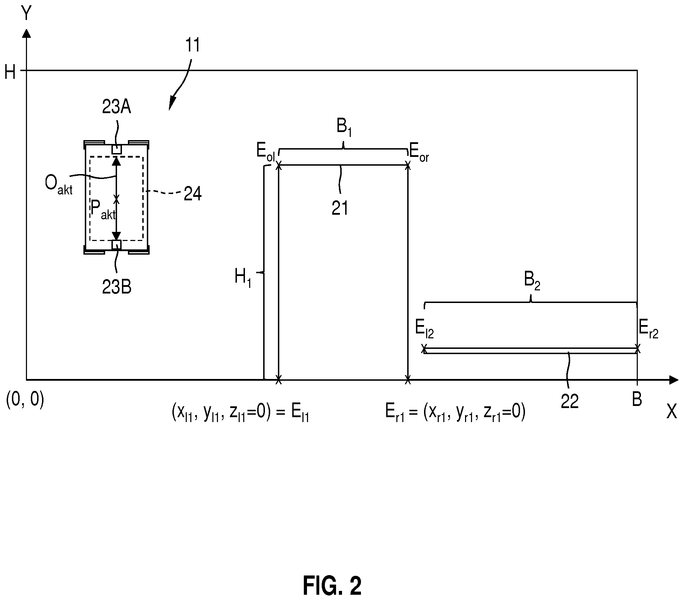

**FIG. 2** zeigt die Rückwand 18 des Innenraums 14 mit dem zu markierenden ersten Objekt 21 und dem zu markierenden zweiten Objekt 22. Die Rückwand 18 liegt in der XY-Ebene des Koordinatensystems und sie weist in X-Richtung eine Breite **B** und in Y-Richtung eine Höhe **H** auf.

Bevor mittels der Markiereinrichtung 11 eine Markierung erstellt wird, muss die Markiereinrichtung 11 über dem ersten oder zweiten Objekt 21, 22 positioniert werden. Dazu wird mittels der Lokalisierungseinrichtung 12 die aktuelle Position **Pₐₖₜ** mit den Koordinaten **xₐₖₜ**, **yₐₖₜ**, **zₐₖₜ** der Markiereinrichtung 11 im Innenraum 14 bestimmt. Die aktuelle Position Pₐₖₜ der Markiereinrichtung 11 wird mit Hilfe von zwei Lokalisierungsmarken **23A**, **23B** bestimmt. Im Ausführungsbeispiel sind die Lokalisierungsmarken 23A, 23B auf der Oberseite der Markiereinrichtung 11 angebracht. Aus der aktuellen Position Pₐₖₜ der Markiereinrichtung 11 bestimmt die Kontrolleinrichtung 13 ein aktuelles Druckfeld **24** der Markiereinrichtung 11. Zwischen den Positionen der Lokalisierungsmarken 23A, 23B und dem Druckfeld 24 der Markiereinrichtung 11 besteht ein bekannter Zusammenhang. Eine aktuelle Orientierung Oₐₖₜ der Markiereinrichtung 11 kann ebenfalls mit Hilfe der Lokalisierungsmarken 23A, 23B bestimmt werden. Nachdem die Kontrolleinrichtung 13 das aktuelle Druckfeld 24 der Markiereinrichtung 11 bestimmt hat, werden die Startpositionen der Objekte 21, 22 von der Kontrolleinrichtung 13 mit dem aktuellen Druckfeld 24 der Markiereinrichtung 11 verglichen.

Der Türdurchbruch 21 weist in X-Richtung eine Breite **B₁** und in Y-Richtung eine Höhe **H₁** auf. Als Startposition für das Markieren des Türdurchbruches 21 eignen sich ein rechter unterer Endpunkt **Eᵣ₁** mit den Koordinaten **xᵣ₁**, **yᵣ₁**, **zᵣ₁** und ein linker unterer Endpunkt **Eₗ₁,** mit den Koordinaten **xₗ₁**, **yₗ₁**, **zₗ₁**. Ausgehend von den Startpositionen Eₗ₁, Eᵣ₁ kann die äußere Begrenzung des Türdurchbruches 21 ohne Unterbrechung auf der Rückwand 18 markiert werden. Die oberen Endpunkte **Eₒₗ** und **Eₒᵣ** weisen ausgehend vom linken unteren Endpunkt die Koordinaten **xₗ₁**, **yₗ₁ + H₁**, **zₗ₁** und **xₗ₁ + B₁**, **yₗ₁ + H₁**, **zₗ₁** auf. Der Mauerschlitz 22 ist durch einen linken Endpunkt **Eₗ₂** mit den Koordinaten **xₗ₂**, **yₗ₂**, **zₗ₂** und einen rechten Endpunkt **Eᵣ₂** mit den Koordinaten **xᵣ₂**, **yᵣ₂**, **zᵣ₂** begrenzt und weist in X-Richtung eine Breite **B₂** auf; er ist als horizontaler Mauerschlitz parallel zur X-Richtung orientiert. Als Startposition für das Markieren des Mauerschlitzes 22 eignen sich die Endpunkte Eₗ₂, Eᵣ₂.

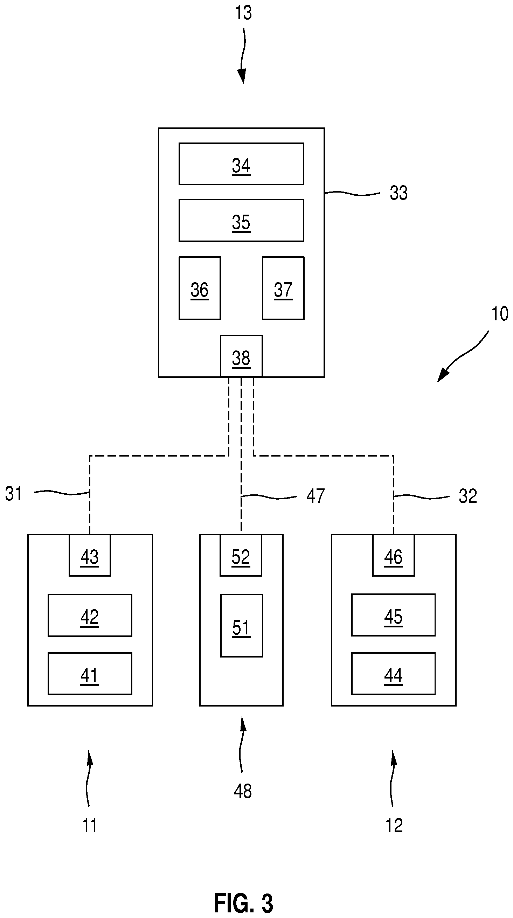

**FIG. 3** zeigt den Aufbau und das Zusammenwirken der Markiereinrichtung 11, der Lokalisierungseinrichtung 12 und der Kontrolleinrichtung 13 in Form eines Blockdiagramms. Die Markiereinrichtung 11, Lokalisierungseinrichtung 12 und Kontrolleinrichtung 13 sind im Ausführungsbeispiel als separate Komponenten ausgebildet, die über Kommunikationsverbindungen miteinander kommunizieren können. Die Markiereinrichtung 11 und die Kontrolleinrichtung 13 sind über eine erste Kommunikationsverbindung **31** miteinander verbindbar. Die Kontrolleinrichtung 13 ist über eine zweite Kommunikationsverbindung **32** mit der Lokalisierungseinrichtung 12 verbindbar. Die Kommunikationsverbindungen können als kabellose Kommunikationsverbindungen, beispielsweise als Funk-, Infrarot-, Bluetooth-, WLAN- oder Wi-Fi-Verbindungen, oder als kabelgebundene Kommunikationsverbindungen ausgebildet sein.

Die Kontrolleinrichtung 13 umfasst ein Gehäuse **33**, in das eine Bedieneinrichtung **34** und ein Anzeigeeinrichtung **35** integriert sind. Die Bedieneinrichtung 34 und die Anzeigeeinrichtung 35 können wie in FIG. 2 gezeigt als separate Teile ausgebildet oder gemeinsam beispielsweise in einen Touchscreen integriert sein. Die Kontrolleinrichtung 13 weist außerdem ein Auswerte- und Steuerelement **36**, ein Speicherelement **37** und ein erstes Sende- und Empfangselement **38** auf.

Die Markiereinrichtung 11 umfasst eine Druckereinrichtung **41**, ein Steuerelement **42** zur Steuerung der Druckereinrichtung 41 und ein zweites Sende- und Empfangselement **43**. Ausgehend vom ersten Sende- und Empfangselement 38 der Kontrolleinrichtung 13 wird die erste Kommunikationsverbindung zum zweiten Sende- und Empfangselement 43 der Markiereinrichtung 11 aufgebaut. Die Steuerbefehle für die Markiereinrichtung 11 werden von der Kontrolleinrichtung 13 über die erste Kommunikationsverbindung 31 an das Steuerelement 42 der Markiereinrichtung 23 übermittelt.

Die Lokalisierungseinrichtung 12 umfasst eine Messeinrichtung **44**, ein Steuer- und Auswerteelement **45** zur Steuerung der Messeinrichtung 44 und zur Auswertung der Messwerte sowie ein drittes Sende- und Empfangselement **46**. Die Lokalisierungseinrichtung 12 ist beispielsweise als Totalstation und die Messeinrichtung 44 als Abstands- und Winkelmesseinrichtung ausgebildet. Ausgehend vom ersten Sende- und Empfangselement 38 der Kontrolleinrichtung 13 wird die zweite Kommunikationsverbindung 32 zum dritten Sende- und Empfangselement 46 der Lokalisierungseinrichtung 12 aufgebaut.

Die zu markierenden Objekte können aus einem Konstruktionsplan ausgewählt und in die Kontrolleinrichtung 13 geladen werden. Konstruktionspläne können im Speicherelement 37 der Kontrolleinrichtung 13 gespeichert sein oder die Kontrolleinrichtung 13 kann über eine dritte Kommunikationsverbindung **47** mit einem zentralen Speicher **48**, der Konstruktionspläne enthält, verbunden werden. Unter dem Begriff "zentraler Speicher" werden sämtliche elektronischen Geräte zusammengefasst, die zur Archivierung von Daten dienen; dazu gehören beispielsweise ein Server, ein Notebook, ein Computer, eine externe Festplatte und ein PDA. Über die dritte Kommunikationsverbindung 47 können Konstruktionspläne aus dem zentralen Speicher 48 an die Kontrolleinrichtung 13 übertragen und im Speicherelement 37 gespeichert werden oder bearbeitete Konstruktionspläne werden von der Kontrolleinrichtung 13 an den zentralen Speicher 48 übertragen und dort archiviert. Der zentrale Speicher 48 umfasst eine Speichereinrichtung **51** und ein viertes Sende- und Empfangselement **52**. Ausgehend vom ersten Sende- und Empfangselement 38 der Kontrolleinrichtung 13 wird die dritte Kommunikationsverbindung 47 zum vierten Sende- und Empfangselement 52 des zentralen Speichers 48 aufgebaut.

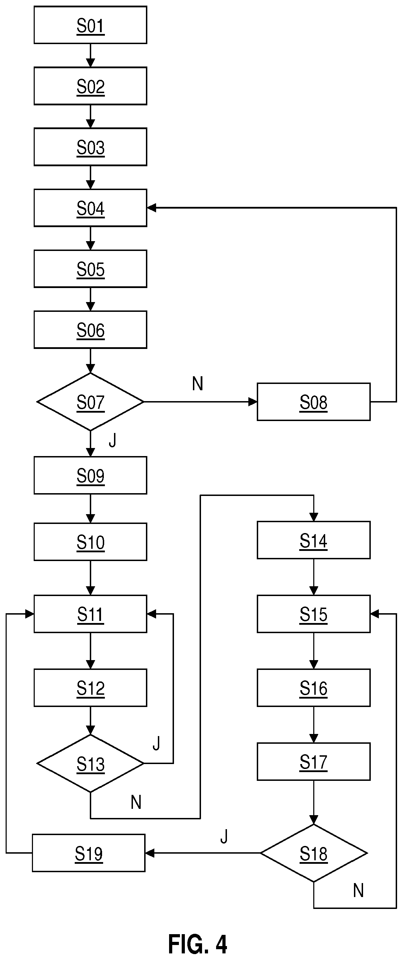

**FIG. 4** zeigt eine erste Ausführungsvariante des erfindungsgemäßen Verfahrens zum Markieren eines Objektes anhand eines Ablaufdiagramms. Die erste Ausführungsvariante wird anhand des Türdurchbruches 21 beschrieben, der das zu markierende erste Objekt bildet und in der Rückwand 18 des Innenraumes 14 angeordnet ist.

Der Bediener wählt in einem Schritt **S01** mittels der Bedieneinrichtung 34 den Türdurchbruch 21 mit der Startposition Eₗ₁ und den Soll-Koordinaten Eₗ₁, Eᵣ₁, Eₒₗ. Eₒᵣ auf der Rückwand 18 aus. Vor dem Start des Verfahrens kann der Bediener einen der Endpunkte Eₗ₁, Eᵣ₁ als Startposition festlegen oder die Kontrolleinrichtung 13 entscheidet während der Durchführung des Verfahrens, welcher der Endpunkte näher liegt, und definiert diesen als Startposition. Im Ausführungsbeispiel der FIG. 4 ist der linke untere Endpunkt Eₗ₁ des Türdurchbruches 21 als Startposition definiert.

Der Türdurchbruch 21 wird in einem Schritt **S02** als zu markierendes Objekt in die Kontrolleinrichtung 13 geladen. Der Bediener startet in einem Schritt **S03** die Ausführung des Verfahrens. Nach dem Start in Schritt S03 bestimmt die Lokalisierungseinrichtung 12 in einem Schritt **S04** die aktuelle Position Pₐₖₜ und aktuelle Orientierung Oₐₖₜ der Markiereinrichtung 11 auf der Rückwand 18, die in einem Schritt **S05** von der Lokalisierungseinrichtung 12 an die Kontrolleinrichtung 13 übermittelt werden. In einem Schritt **S06** bestimmt die Kontrolleinrichtung 13 aus der aktuellen Position und Orientierung Pₐₖₜ, Oₐₖₜ das aktuelle Druckfeld 24 der Markiereinrichtung 11 und vergleicht die Startposition Eₗ₁ in einem Schritt **S07** mit dem aktuellen Druckfeld 24. Dabei prüft die Kontrolleinrichtung 13 in Schritt S07, ob die Startposition Eₗ₁ des Objektes 21 innerhalb des aktuellen Druckfeldes 24 angeordnet ist.

Ist die Startposition Eₗ₁ des Objektes 21 außerhalb des aktuellen Druckfeldes 24 angeordnet (N in S07), erstellt die Kontrolleinrichtung 13 in einem Schritt **S08** aus der aktuellen Position und Orientierung Pₐₖₜ, Oₐₖₜ der Markiereinrichtung 11 und der Startposition Eₗ₁ des Objektes 21 eine Verstellanweisung für die Markiereinrichtung 11, die auf der Anzeigeeinrichtung 35 dargestellt wird. Anschließend wird das Verfahren wird mit Schritt S04 fortgesetzt. Die Schritte S04 bis S07 und S08 werden als Verfahrensabschnitt "Zielsuche" **V₁** zusammengefasst.

Wenn die Startposition Eₗ₁ innerhalb des aktuellen Druckfeldes 24 angeordnet ist (J in S07), erteilt die Kontrolleinrichtung 13 in einem Schritt **S09** einen Steuerbefehl zum Markieren des Objektes 21 an die Markiereinrichtung 11 und bestimmt in einem Schritt **S10** aus der aktuellen Position und Orientierung Pₐₖₜ, Oₐₖₜ und den Soll-Koordinaten Eₗ₁, Eᵣ₁, Eₒₗ, Eₒᵣ des Objektes 21 eine Verstellanweisung, wie die Markiereinrichtung 11 über das zu markierende Objekt 21 zu bewegen ist. Die Lokalisierungseinrichtung 12 bestimmt in einem Schritt **S11** die aktuelle Position und Orientierung Pₐₖₜ, Oₐₖₜ mit einer Lokalisierungsfrequenz und übermittelt die Positionsdaten an die Kontrolleinrichtung 13. Die Kontrolleinrichtung 13 bestimmt in einem Schritt **S12** aus der aktuellen Position und Orientierung Pₐₖₜ, Oₐₖₜ das aktuelle Druckfeld 24 und vergleicht die Soll-Koordinaten Eₗ₁, Eᵣ₁, Eₒₗ, Eₒᵣ des zu markierenden Objektes 21 in einem Schritt **S13** mit dem aktuellen Druckfeld 24.

Sind die Soll-Koordinaten Eₗ₁, Eᵣ₁, Eₒₗ, Eₒᵣ des zu markierenden Objektes 21 innerhalb des aktuellen Druckfeldes 24 angeordnet (J in S13), wird das erfindungsgemäße Verfahren mit Schritt S11 fortgesetzt. Wenn die Soll-Koordinaten Eₗ₁, Eᵣ₁, Eₒₗ, Eₒᵣ des zu markierenden Objektes 21 außerhalb des aktuellen Druckfeldes 24 angeordnet sind (N in S13), erteilt die Kontrolleinrichtung 13 in einem Schritt **S14** einen Steuerbefehl an die Markiereinrichtung 11, das Markieren des Objektes 21 zu unterbrechen. Die Kontrolleinrichtung 13 erstellt in einem Schritt **S15** aus der aktuellen Position und Orientierung Pₐₖₜ, Oₐₖₜ der Markiereinrichtung 11 und den Soll-Koordinaten Eₗ₁, Eᵣ₁, Eₒₗ, Eₒᵣ des Objektes 21 eine Verstellanweisung, die auf der Anzeigeeinrichtung 35 dargestellt wird. Die aktuelle Position und Orientierung Pₐₖₜ, Oₐₖₜ der Detektoreinrichtung 11 werden in einem Schritt **S16** von der Lokalisierungseinrichtung 12 bestimmt und an die Kontrolleinrichtung 13 übermittelt. Die Kontrolleinrichtung 13 bestimmt in einem Schritt **S17** aus der aktuellen Position und Orientierung Pₐₖₜ, Oₐₖₜ der Markiereinrichtung 11 das aktuelle Druckfeld 24 und vergleicht die Soll-Koordinaten des Objektes 21 in einem Schritt **S18** mit dem aktuellen Druckfeld 24.

Sind die Soll-Koordinaten des Objektes 21 außerhalb des aktuellen Druckfeldes 24 angeordnet (N in S18), wird das erfindungsgemäße Verfahren mit Schritt S15 fortgesetzt. Wenn die Soll-Koordinaten des Objektes 21 innerhalb des aktuellen Druckfeldes 24 angeordnet sind (J in S18), erstellt die Kontrolleinrichtung 13 in einem Schritt **S19** einen Steuerbefehl an die Markiereinrichtung 11, das Markieren des Objektes 21 fortzusetzen. Anschließend wird das Verfahren mit Schritt S11 fortgesetzt.

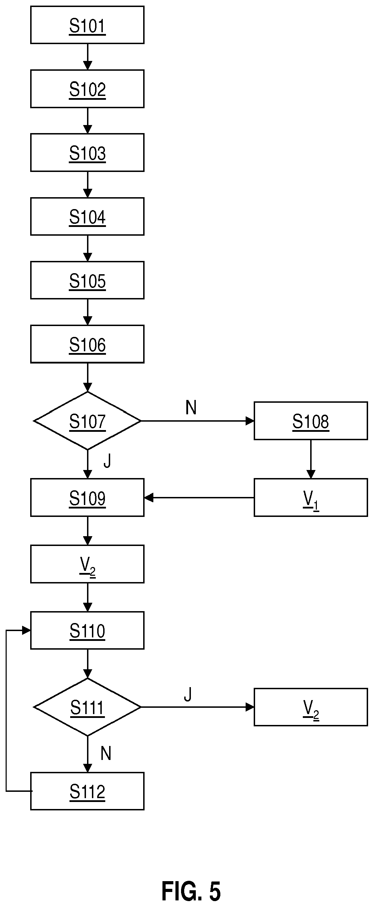

**FIG. 5** zeigt eine zweite Ausführungsvariante des erfindungsgemäßen Verfahrens zum Markieren eines ersten Objektes und eines zweiten Objektes anhand eines Ablaufdiagramms. Die zweite Ausführungsvariante wird anhand des Türdurchbruches 21, der das zu markierende erste Objekt bildet, und des Mauerschlitzes 22, der das zu markierende zweite Objekt bildet, beschrieben. Dabei sind der Türdurchbruch 21 und der Mauerschlitz 22 in der Rückwand 18 des Innenraumes 14 angeordnet.

Vor dem Start des Verfahrens kann der Bediener die Reihenfolge, in der die Objekte 21, 22 auf die Rückwand 18 übertragen werden, festlegen oder die Kontrolleinrichtung 13 entscheidet während der Durchführung des Verfahrens, welches der Objekte näher liegt, und als erstes auf die Rückwand 18 übertragen wird. Im Ausführungsbeispiel der FIG. 5 werden die Abstände zwischen den Startpositionen und der aktuellen Position der Markiereinrichtung bestimmt.

Der Bediener wählt in einem Schritt S101 den Türdurchbruch 21 mit der ersten Startposition Eₗ₁ und den ersten Soll-Koordinaten Eₗ₁, Eᵣ₁, Eₒₗ, Eₒᵣ als erstes Objekt und den Mauerschlitz 22 mit der zweiten Startposition Eₗ₂ und den zweiten Soll-Koordinaten Eₗ₂, Eᵣ₂ als zweites Objekt aus; der Türdurchbruch 21 und der Mauerschlitz 22 werden in einem Schritt **S102** als zu markierende Objekte in die Kontrolleinrichtung 13 geladen. Der Bediener startet in einem Schritt **S103** die Ausführung des Verfahrens.

Nach dem Start in Schritt S103 bestimmt die Lokalisierungseinrichtung 12 in einem Schritt **S104** die aktuelle Position Pₐₖₜ und aktuelle Orientierung Oₐₖₜ der Markiereinrichtung 11 auf der Rückwand 18, die in einem Schritt **S105** von der Lokalisierungseinrichtung 12 an die Kontrolleinrichtung 13 übermittelt werden. In einem Schritt **S106** bestimmt die Kontrolleinrichtung 13 aus der aktuellen Position und Orientierung Pₐₖₜ, Oₐₖₜ das aktuelle Druckfeld 24 der Markiereinrichtung 11 und vergleicht die erste und zweite Startposition Eₗ₁, Eₗ₂ in einem Schritt **S107** mit dem aktuellen Druckfeld 24. Dabei prüft die Kontrolleinrichtung 13 in Schritt S107, ob die erste Startposition Eₗ₁ des ersten Objektes 21 oder die zweite Startposition Eₗ₂ des zweiten Objektes 22 innerhalb des aktuellen Druckfeldes 24 angeordnet ist.

Sind die erste und zweite Startposition Eₗ₁, Eₗ₂ außerhalb des aktuellen Druckfeldes 24 angeordnet (N in S107), berechnet die Kontrolleinrichtung 13 in einem Schritt **S108** aus der aktuellen Position und Orientierung Pₐₖₜ, Oₐₖₜ der Markiereinrichtung 11 einen ersten Abstand **d₁** zur ersten Startposition Eₗ₁ und einen zweiten Abstand **d₂** zur zweiten Startposition Eₗ₁ und erstellt für das Objekt mit dem geringeren Abstand eine Verstellanweisung für die Markiereinrichtung 11, die auf der Anzeigeeinrichtung 35 dargestellt wird. Für das Objekt mit dem geringeren Abstand wird der Verfahrensabschnitt "Zielsuche" V₁ durchgeführt; die Schritte des Verfahrensabschnittes V₁ entsprechen den Schritten S04 bis S08.

Wenn die erste Startposition Eₗ₁ des ersten Objektes 21 oder die zweite Startposition Eₗ₂ des zweiten Objektes innerhalb des aktuellen Detektionsfeldes 24 angeordnet ist (J in S107), erteilt die Kontrolleinrichtung 13 in einem Schritt **S109** einen Steuerbefehl an die Markiereinrichtung 11, die Markierung des entsprechenden Objektes auszuführen. Die weiteren Verfahrensschritte, die bei Markieren des Objektes ausgeführt werden, entsprechen den Schritten S10 bis S19, die als Verfahrensabschnitt "Zielführung" **V₂** zusammengefasst werden.

Nachdem das erste der beiden Objekte 21, 22 auf der Rückwand 18 markiert wurde, wird das Verfahren für das zweite der beiden Objekte 22,21 fortgesetzt. Die Kontrolleinrichtung 13 bestimmt in einem Schritt **S110** aus der aktuellen Position und Orientierung Pₐₖₜ, Oₐₖₜ der Markiereinrichtung 11 das aktuelle Druckfeld 24 und prüft in einem Schritt **S111**, ob die Startposition innerhalb des aktuellen Druckfeldes 24 angeordnet ist.

Ist die Startposition außerhalb des aktuellen Druckfeldes 24 angeordnet (N in S111), erstellt die Kontrolleinrichtung 13 in einem Schritt **S112** aus der aktuellen Position und Orientierung Pₐₖₜ, Oₐₖₜ der Markiereinrichtung 11 und der Startposition eine Verstellanweisung für die Markiereinrichtung 11, die auf der Anzeigeeinrichtung 35 dargestellt wird; das erfindungsgemäße Verfahren wird mit Schritt S110 fortgesetzt. Wenn die Startposition innerhalb des aktuellen Druckfeldes 24 angeordnet ist (J in S111), wird das erfindungsgemäße Verfahren mit dem Verfahrensabschnitt "Zielführung" V₂ fortgesetzt.

## Patentansprüche

1. Verfahren zum Übertragen von Objekten auf eine Grenzfläche (18), die als Begrenzung eines Raumes (14) ausgebildet ist, mittels einer Vorrichtung (10), die eine Markiereinrichtung (11) mit einer Druckereinrichtung (41), eine Lokalisierungseinrichtung (12) und eine Kontrolleinrichtung (13) aufweist, wobei:
▪ in einem ersten Schritt ein zu markierendes erstes Objekt (21) mit einer ersten Startposition (Eₗ₁) und ersten Soll-Koordinaten (Eₗ₁, Eᵣ₁, Eₒₗ, Eₒᵣ) ausgewählt wird, wobei die Abmessungen (B₁, H₁) des ersten Objektes (21) grösser sind als die Abmessungen eines Druckfeldes der Druckereinrichtung (41),
▪ in einem zweiten Schritt mittels der Lokalisierungseinrichtung (12) eine aktuelle Position (Pₐₖₜ) und eine aktuelle Orientierung (Oₐₖₜ) der Markiereinrichtung (11) bestimmt wird,
▪ in einem dritten Schritt von der Kontrolleinrichtung (13) aus der aktuellen Position (Pₐₖₜ) und der aktuellen Orientierung (Oₐₖₜ) der Markiereinrichtung (11) ein aktuelles Druckfeld (24) der Markiereinrichtung (11) auf der Grenzfläche (18) bestimmt wird,
▪ in einem vierten Schritt die erste Startposition (Eₗ₁) des ersten Objektes (21) von der Kontrolleinrichtung (13) mit dem aktuellen Druckfeld (24) der Markiereinrichtung (11) auf der Grenzfläche (18) verglichen werden und
▪ von der Kontrolleinrichtung (13) ein Steuerbefehl zum Markieren des ersten Objektes (21) an die Markiereinrichtung (11) erteilt wird, wenn die erste Startposition (Eₗ₁) innerhalb des aktuellen Druckfeldes (24) der Markiereinrichtung (11) auf der Grenzfläche (18) angeordnet ist.

2. Verfahren nach Anspruch 1, **dadurch gekennzeichnet, dass** aus der aktuellen Position (Pₐₖₜ) und der aktuellen Orientierung (Oₐₖₜ) der Markiereinrichtung (11) und der ersten Startposition (Eₗ₁) des ersten Objektes (21) von der Kontrolleinrichtung (13) eine Verstellanweisung für die Markiereinrichtung (11) berechnet und auf einer Anzeigeeinrichtung (35) dargestellt wird, wenn die erste Startposition (Eₗ₁) des ersten Objektes (21) außerhalb des aktuellen Druckfeldes (24) der Markiereinrichtung (11) auf der Grenzfläche (18) angeordnet ist.

3. Verfahren nach Anspruch 1, **dadurch gekennzeichnet, dass** von der Kontrolleinrichtung (13) eine Bedienungsanweisung, die Markiereinrichtung (11) anzuhalten, erstellt und auf einer Anzeigeeinrichtung (35) dargestellt wird, wenn die erste Startposition (Eₗ₁) innerhalb des aktuellen Druckfeldes (24) der Markiereinrichtung (11) auf der Grenzfläche (18) angeordnet ist.

4. Verfahren nach Anspruch 3, **dadurch gekennzeichnet, dass** von der Kontrolleinrichtung (13) ein Steuerbefehl zum Markieren des ersten Objektes (21) an die Markiereinrichtung (11) erteilt wird, wenn die erste Startposition (Eₗ₁) innerhalb des aktuellen Druckfeldes (24) der Markiereinrichtung (11) auf der Grenzfläche (18) angeordnet ist und die Markiereinrichtung (11) nicht bewegt wird.

5. Verfahren nach Anspruch 4, **dadurch gekennzeichnet, dass** während des Markierens mit der Markiereinrichtung (11) aus den ersten Soll-Koordinaten (Eₗ₁, Eᵣ₁, Eₒₗ, Eₒᵣ) des ersten Objektes (21) und der aktuellen Position (Pₐₖₜ) und der aktuellen Orientierung (Oₐₖₜ) der Markiereinrichtung (11) von der Kontrolleinrichtung (13) eine Verstellanweisung für die Markiereinrichtung (11) erstellt und auf der Anzeigeeinrichtung (35) dargestellt wird.

6. Verfahren nach Anspruch 5, **dadurch gekennzeichnet, dass** die aktuelle Position (Pₐₖₜ) und die aktuelle Orientierung (Oₐₖₜ) der Markiereinrichtung (11) mit einer Lokalisierungsfrequenz (fₗₒₖₐₗ) von der Lokalisierungseinrichtung (12) bestimmt werden und die Positionsdaten mit einer Übertragungsfrequenz (f) von der Lokalisierungseinrichtung (12) an die Kontrolleinrichtung (13) übermittelt werden.

7. Verfahren nach Anspruch 4, **dadurch gekennzeichnet, dass** von der Kontrolleinrichtung (13) ein Steuerbefehl, das Markieren des ersten Objektes (21) zu unterbrechen, an die Markiereinrichtung (11) erteilt wird, wenn die ersten Soll-Koordinaten (Eₗ₁, Eᵣ₁, Eₒₗ, Eₒᵣ) des ersten Objektes (21) außerhalb des aktuellen Druckfeldes (24) der Markiereinrichtung (11) auf der Grenzfläche (18) angeordnet sind.

8. Verfahren nach Anspruch 1, wobei:
▪ im ersten Schritt neben dem ersten Objekt (21) ein zu markierendes zweites Objekt (22) mit einer zweiten Startposition (Eₗ₂) und zweiten Soll-Koordinaten (Eₗ₂, Eᵣ₂) ausgewählt wird und
▪ im vierten Schritt neben der ersten Startposition (Eₗ₁) des ersten Objektes (21) die zweite Startposition (Eₗ₂) des zweiten Objektes (22) von der Kontrolleinrichtung (13) mit dem aktuellen Druckfeld (24) der Markiereinrichtung (11) auf der Grenzfläche (18) verglichen wird.

9. Verfahren nach Anspruch 8, **dadurch gekennzeichnet, dass** von der Kontrolleinrichtung (13) an die Markiereinrichtung (11) ein Steuerbefehl zum Markieren des ersten Objektes (21) erteilt wird, wenn die erste Startposition (Eₗ₁) innerhalb des aktuellen Druckfeldes (24) der Markiereinrichtung (11) auf der Grenzfläche (18) angeordnet ist, oder ein Steuerbefehl zum Markieren des zweiten Objektes (22) erteilt wird, wenn die zweite Startposition (Eₗ₂) innerhalb des aktuellen Druckfeldes (24) der Markiereinrichtung (11) auf der Grenzfläche (18) angeordnet ist.

10. Verfahren nach Anspruch 9, **dadurch gekennzeichnet, dass** nach dem Markieren eines Objektes aus der aktuellen Position (Pₐₖₜ) und der aktuellen Orientierung (Oₐₖₜ) der Markiereinrichtung (11) und der Startposition des anderen Objektes von der Kontrolleinrichtung (13) eine Verstellanweisung für die Markiereinrichtung (11) berechnet und auf einer Anzeigeeinrichtung (35) dargestellt wird.

11. Verfahren nach Anspruch 8, **dadurch gekennzeichnet, dass** aus der aktuellen Position (Pₐₖₜ) und der aktuellen Orientierung (Oₐₖₜ) der Markiereinrichtung (11) sowie der ersten und zweiten Startposition (Eₗ₁, Eₗ₂) des ersten und zweiten Objektes (21, 22) von der Kontrolleinrichtung (13) ein erster und zweiter Abstand (d₁, d₂) berechnet werden, wenn die erste und zweite Startposition (Eₗ₁, Eₗ₂) außerhalb des aktuellen Druckfeldes (24) der Markiereinrichtung (11) auf der Grenzfläche (18) angeordnet sind.

12. Verfahren nach Anspruch 11, **dadurch gekennzeichnet, dass** der erste und zweite Abstand (d₁, d₂) von der Kontrolleinrichtung (13) miteinander verglichen werden und für das Objekt mit dem geringeren Abstand zur aktuellen Position (Pₐₖₜ) der Markiereinrichtung (11) von der Kontrolleinrichtung (13) eine Verstellanweisung für die Markiereinrichtung (11) berechnet und auf einer Anzeigeeinrichtung (35) dargestellt wird.

## Claims

1. Method of transmitting objects on to a boundary surface (18) designed as the boundary of a space (14) by means of an apparatus (10) comprising a marking device (11) having a printing device (41), a locator device (12) and a control device (13), wherein:
▪ in a first step, a first object (21) to be marked having a first starting position (Eₗ₁) and first target coordinates (Eₗ₁, Eᵣ₁, Eₒₗ, Eₒᵣ) is selected, the dimensions (B₁, H₁) of the first object (21) being greater than the dimensions of the print field of the printing device (41),
▪ in a second step, the current position (Pₐₖₜ) and the current orientation (Oₐₖₜ) of the marking device (11) are determined by means of the locator device (12),
▪ in a third step, the current print field (24) of the marking device (11) on the boundary surface (18) is determined by the control device (13) based on the current position (Pₐₖₜ) and the current orientation (Oₐₖₜ) of the marking device (11),
▪ in a fourth step, the first starting position (Eₗ₁) of the first object (21) is compared with the current print field (24) of the marking device (11) on the boundary surface (18) by the control device (13) and
▪ a command to mark the first object (21) is issued to the marking device (11) by the control device (13) when the first starting position (Eₗ₁) is arranged within the current print field (24) of the marking device (11) on the boundary surface (18).

2. Method according to claim 1, **characterised in that** adjustment instructions for the marking device (11) are calculated by the control device (13) based on the current position (Pₐₖₜ) and the current orientation (Oₐₖₜ) of the marking device (11) and the first starting position (Eₗ₁) of the first object (21) and displayed on a display (35) when the first starting position (Eₗ₁) of the first object (21) is arranged outside the current print field (24) of the marking device (11) on the boundary surface (18).

3. Method according to claim 1, **characterised in that** operating instructions to stop the marking device (11) are generated by the control device (13) and displayed on a display (35) when the first starting position (Eₗ₁) is arranged within the current print field (24) of the marking device (11) on the boundary surface (18).

4. Method according to claim 3, **characterised in that** a command to mark the first object (21) is issued to the marking device (11) by the control device (13) when the first starting position (Eₗ₁) is arranged within the current print field (24) of the marking device (11) on the boundary surface (18) and the marking device (11) is not moved.

5. Method according to claim 4, **characterised in that**, during marking by the marking device (11), adjustment instructions for the marking device (11) are generated by the control device (13) from the first target coordinates (Eₗ₁, Eᵣ₁, Eₒₗ, Eₒᵣ) of the first object (21) and the current position (Pₐₖₜ) and the current orientation (Oₐₖₜ) of the marking device (11) and displayed on the display (35).

6. Method according to claim 5, **characterised in that** the current position (Pₐₖₜ) and the current orientation (Oₐₖₜ) of the marking device (11) are determined by the locator device (12) with a locating frequency (fₗₒₖₐₗ) and the position data are transmitted to the control device (13) by the locator device (12) with a transmission frequency (f).

7. Method according to claim 4, **characterised in that** a command to interrupt the marking of the first object (21) is issued to the marking device (11) by the control device (13) when the first target coordinates (Eₗ₁, Eᵣ₁, Eₒₗ, Eₒᵣ) of the first object (21) are arranged outside the current print field (24) of the marking device (11) on the boundary surface (18).

8. Method according to claim 1, wherein:
▪ in the first step, in addition to the first object (21), a second object (22) to be marked having a second starting position (Eₗ₂) and second target coordinates (Eₗ₂, Eᵣ₂) is selected and
▪ in the fourth step, in addition to the first starting position (Eₗ₁) of the first object (21), the second starting position (Eₗ₂) of the second object (22) is compared with the current print field (24) of the marking device (11) on the boundary surface (18) by the control device (13).

9. Method according to claim 8, **characterised in that** a command to mark the first object (21) is issued to the marking device (11) by the control device (13) when the first starting position (Eₗ₁) is arranged within the current print field (24) of the marking device (11) on the boundary surface (18) or a command to mark the second object (22) is issued when the second starting position (Eₗ₂) is arranged within the current print field (24) of the marking device (11) on the boundary surface (18).

10. Method according to claim 9, **characterised in that**, after the marking of an object, adjustment instructions for the marking device (11) are calculated by the control device (13) based on the current position (Pₐₖₜ) and the current orientation (Oₐₖₜ) of the marking device (11) and the starting position of the other object and displayed on a display (35).

11. Method according to claim 8, **characterised in that** first and second distances (d₁, d₂) are calculated by the control device (13) based on the current position (Pₐₖₜ) and the current orientation (Oₐₖₜ) of the marking device (11) and on the first and second starting positions (Eₗ₁, Eₗ₂) of the first and second objects (21, 22) when the first and second starting positions (Eₗ₁, Eₗ₂) are arranged outside the current print field (24) of the marking device (11) on the boundary surface (18).

12. Method according to claim 11, **characterised in that** the first and second distances (d₁, d₂) are compared with one another by the control device (13) and adjustment instructions for the marking device (11) are calculated by the control device (13) for that object having the shorter distance from the current position (Pₐₖₜ) of the marking device (11) and displayed on a display (35).

## Revendications

1. Procédé pour transporter des objets sur une surface de séparation (18) formée comme une délimitation d'un espace (14), au moyen d'un dispositif (10) comportant un dispositif de marquage (11) ayant un dispositif d'impression (41), un dispositif de localisation (12) et un dispositif de contrôle (13), dans lequel :
• à une première étape, un premier objet à marquer (21) ayant une première position de départ (Eₗ₁) et des premières coordonnées de consigne (Eₗ₁, Eᵣ₁, Eₒₗ, Eₒᵣ) est choisi, les dimensions (B₁, H₁) du premier objet (21) étant plus grandes que les dimensions d'un champ d'impression du dispositif d'impression (41),
• à une deuxième étape, une position actuelle (Pₐₖₜ) et une orientation actuelle (Oₐₖₜ) du dispositif de marquage (11) sont déterminées au moyen du dispositif de localisation (12),
• à une troisième étape, un champ d'impression actuel (24) du dispositif de marquage (11) sur la surface de séparation (18) est déterminé par le dispositif de contrôle (13) à partir de la position actuelle (Pₐₖₜ) et de l'orientation actuelle (Oₐₖₜ) du dispositif de marquage (11),
• à une quatrième étape, la première position de départ (Eₗ₁) du premier objet (21) est comparée au champ d'impression actuel (24) du dispositif de marquage (11) sur la surface de séparation (18) par le dispositif de contrôle (13) et
• une instruction de commande de marquage du premier objet (21) est transmise au dispositif de marquage (11) par le dispositif de contrôle (13), lorsque la première position de départ (Eₗ₁) est située à l'intérieur du champ d'impression actuel (24) du dispositif de marquage (11) sur la surface de séparation (18).

2. Procédé selon la revendication 1, **caractérisé en ce qu'**une instruction de réglage du dispositif de marquage (11) est calculée par le dispositif de contrôle (13) à partir de la position actuelle (Pₐₖₜ) et de l'orientation actuelle (Oₐₖₜ) du dispositif de marquage (11) et de la première position de départ (Eₗ₁) du premier objet (21), et est affichée sur un dispositif d'affichage (35) lorsque la première position de départ (Eₗ₁) du premier objet (21) est située à l'extérieur du champ d'impression actuel (24) du dispositif de marquage (11) sur la surface de séparation (18).

3. Procédé selon la revendication 1, **caractérisé en ce qu'**une instruction de commande d'arrêter le dispositif de marquage (11) est transmise par le dispositif de contrôle (13) et est affichée sur un dispositif d'affichage (35) lorsque la première position de départ (Eₗ₁) est située à l'intérieur du champ d'impression actuel (24) du dispositif de marquage (11) sur la surface de séparation (18).

4. Procédé selon la revendication 3, **caractérisé en ce qu'**une instruction de commande de marquage du premier objet (21) est transmise au dispositif de marquage (11) par le dispositif de contrôle (13), lorsque la première position de départ (Eₗ₁) est située à l'intérieur du champ d'impression actuel (24) du dispositif de marquage (11) sur la surface de séparation (18) et que le dispositif de marquage (11) n'est pas déplacé.

5. Procédé selon la revendication 4, **caractérisé en ce que** pendant le marquage à l'aide du dispositif de marquage (11), une instruction de réglage du dispositif de marquage (11) à partir des premières coordonnées de consigne (Eₗ₁, Eᵣ₁, Eₒₗ, Eₒᵣ) du premier objet (21) et de la position actuelle (Pₐₖₜ) et de l'orientation actuelle (Oₐₖₜ) du dispositif de marquage (11) est transmise par le dispositif de contrôle (13), et est affichée sur le dispositif d'affichage (35).

6. Procédé selon la revendication 5, **caractérisé en ce que** la position actuelle (Pₐₖₜ) et l'orientation actuelle (Oₐₖₜ) du dispositif de marquage (11) sont déterminées en utilisant une fréquence de localisation (fₗₒₖₐₗ) par le dispositif de localisation (12) et les données de position sont transmises à une fréquence de transmission (f) du dispositif de localisation (12) au dispositif de contrôle (13).

7. Procédé selon la revendication 4, **caractérisé en ce qu'**une instruction de commande d'arrêter le marquage du premier objet (21) est transmise au dispositif de marquage (11) par le dispositif de contrôle (13), lorsque les premières coordonnées de consigne (Eₗ₁, Eᵣ₁, Eₒₗ, Eₒᵣ) du premier objet (21) sont situées à l'extérieur du champ d'impression actuel (24) du dispositif de marquage (11) sur la surface de séparation (18).

8. Procédé selon la revendication 1, dans lequel :
• à la première étape, à côté du premier objet (21), un second objet (22) à marquer ayant une seconde position de départ (Eₗ₂) et des secondes coordonnées de consigne (Eₗ₂, Eᵣ₂) est choisi, et
• à la quatrième étape, à côté de la première position de départ (Eₗ₁) du premier objet (21), la seconde position de départ (Eₗ₂) du second objet (22) est comparée par le dispositif de contrôle (13) avec le champ d'impression actuel (24) du dispositif de marquage (11) sur la surface de séparation (24).

9. Procédé selon la revendication 8, **caractérisé en ce qu'**une instruction de commande de marquage du premier objet (21) est transmise au dispositif de marquage (11) par le dispositif de contrôle (13), lorsque la première position de départ (Eₗ₁) est située à l'intérieur du champ d'impression actuel (24) du dispositif de marquage (11) sur la surface de séparation (18), ou une instruction de commande de marquage du second objet (22) est transmise, lorsque la seconde position de départ (Eₗ₂) est située à l'intérieur du champ d'impression actuel (24) du dispositif de marquage (11) sur la surface de séparation (18).

10. Procédé selon la revendication 9, **caractérisé en ce qu'**après le marquage d'un objet, une instruction de réglage du dispositif de marquage (11) est calculée par le dispositif de contrôle (13) à partir de la position actuelle (Pₐₖₜ) et de l'orientation actuelle (Oₐₖₜ) du dispositif de marquage (11) et de la position de départ de l'autre objet, et est affichée sur un dispositif d'affichage (35).

11. Procédé selon la revendication 8, **caractérisé en ce qu'**une première et une seconde distances (d₁, d₂) sont calculées par le dispositif de contrôle (13) à partir de la position actuelle (Pₐₖₜ) et de l'orientation actuelle (Oₐₖₜ) du dispositif de marquage (11) ainsi que des première et seconde positions de départ (Eₗ₁, Eₗ₂) des premier et second objets (21, 22), lorsque les première et seconde positions de départ (Eₗ₁, Eₗ₂) sont situées à l'extérieur du champ d'impression actuel (24) du dispositif de marquage (11) sur la surface de séparation (18).

12. Procédé selon la revendication 11, **caractérisé en ce que** les première et seconde distances (d₁, d₂) sont comparés l'une à l'autre par le dispositif de contrôle (13) et une instruction de réglage du dispositif de marquage (11) est calculée par le dispositif de contrôle (13) pour l'objet ayant la plus petite distance par rapport à la position actuelle (Pₐₖₜ) du dispositif de marquage (11), et est affichée sur un dispositif d'affichage (35) .
